Europäisches Patentamt

(19) European Patent Office       (11) Publication number: **0 164 231**
Office européen des brevets                              **B1**

(12)       **EUROPEAN PATENT SPECIFICATION**

(45) Date of publication of patent specification: **29.03.89**      (51) Int. Cl.⁴: **B 60 T 11/08**

(21) Application number: **85303460.1**

(22) Date of filing: **17.05.85**

(54) **Parking brake mechanism.**

(30) Priority: **08.06.84 US 618665**

(43) Date of publication of application:
**11.12.85 Bulletin 85/50**

(45) Publication of the grant of the patent:
**29.03.89 Bulletin 89/13**

(84) Designated Contracting States:
**DE FR GB**

(56) References cited:
**DE-U-7 715 371**
**US-A-3 002 394**
**US-A-3 487 716**
**US-A-3 974 713**
**US-A-4 391 159**

(73) Proprietor: **GENERAL MOTORS CORPORATION**
**General Motors Building 3044 West Grand**
**Boulevard**
**Detroit Michigan 48202 (US)**

(72) Inventor: **Nicholson, Michael Alan**
**2204 Church Street**
**Windsor Ontario (CA)**
Inventor: **Kosmanski, Thomas James**
**2228 Old Hickory Boulevard**
**Davison Michigan 48423 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

Courier Press, Leamington Spa, England.

## Description

This invention relates to a parking brake mechanism as specified in the preamble of claim 1, for example as disclosed in US-A-3.002.394.

The present invention is concerned with achieving a parking brake mechanism which is applied by a plurality of strokes of the brake pedal lever, with simultaneous variation of the effective ratio between the stroke of the lever and the parking brake cable travel, for the purpose of obtaining an increased mechanical advantage as the tension is increased in the parking brake cable.

To this end a parking brake mechanism in accordance with the present invention is characterised over the above mentioned prior art by the features specified in the characterising portion of claim 1.

A multi-stroke parking brake mechanism embodying the invention has the potential to provide appropriate in-car parking brake pedal location with respect to the vehicle operator, to compensate for the minimum amount of pedal lever travel that is available due to the location of various interior body panels, and to provide the cable travel and force required for adequate parking braking. The parking brake mechanism is particularly advantageous when incorporated in a vehicle disc brake caliper assembly, which usually requires more cable travel than does a drum brake type of parking brake mechanism.

In a specific embodiment of a parking brake mechanism in accordance with the present invention, the mechanism includes a foot-operated lever (pedal lever) that can be pumped or depressed several times to activate the parking brake system. After each depression of the lever, subsequent reduction in, or removal of, the foot pressure allows return of the lever to its original rest or released position so that the vehicle operator can easily stroke the lever again, as desired. Depression of the lever in the brake-actuating direction causes an eccentric cable take-up member to be rotated by way of a pawl mechanism and then to be held in place by another pawl mechanism as the parking brake lever returns to its rest position. The two ends of the parking brake cable are attached respectively to the eccentric cable take-up member at or very near its maximum radius and to the parking brake mechanism at the vehicle wheel. Arcuate rotation of the eccentric causes the cable to be wrapped on it: the eccentric cable take-up member is carefully designed to impart a predetermined variable tension load on the cable as well as a predetermined cable travel for a set amount of arcuate eccentric take-up member movement. The predetermined cable force and travel are particularly important in meeting United States Government parking brake gradient-holding specifications while maintaining a maximum foot pedal parking brake-applying force below a specified maximum value.

A parking brake release handle and associated lever linkage is incorporated into the mechanism so that the handle may be pulled to disengage the pawl that normally prevents the eccentric cable take-up member from rotating in the brake-release direction. When the pawl is so disengaged, the tension force in the parking brake cable causes the eccentric cable take-up member to rotate back to its original released position, thereby releasing the parking brake.

The eccentric cable take-up member on which the cable wraps as brake actuation occurs is provided with a substantially constant bending radius to provide variable cable loads and cable travel, for varying the mechanical advantage as the parking brake is actuated. The eccentric cable take-up member permits the take-up of a large portion of the cable which is necessary for the parking brake function.

The parking brake mechanism is side-mounted to a vehicle body shear wall bracket by several fasteners for structural integrity.

A tab or other abutment may be provided on the fixed mounting bracket of the mechanism to limit the maximum amount of brake pedal travel. A guard may be provided at the upper portion of the mechanism to prevent body acoustic material and other matter from becoming entwined in any portion of the mechanism and interfering with its operation. An electric switch may be provided which is activated as the brake lever is moved in the brake-actuating direction to rotate the eccentric take-up member and control a parking brake indicator light on the instrument panel.

In the drawings:

Figure 1 is a fragmentary elevational view, with portions shown in phantom lines, showing a preferred embodiment of a parking brake mechanism in accordance with the present invention, with the mechanism illustrated in a fully released position;

Figure 2 is a view similar to Figure 1 but showing the mechanism at the completion of a first brake apply stroke;

Figure 3 is a view similar to Figure 1 but illustrating the condition when the parking brake has been fully applied and a pedal lever thereof has been returned to its rest position;

Figure 4 is a cross-sectional view of the mechanism illustrated in Figure 3, with parts broken away; and

Figure 5 is a fragmentary elevational view of portions of the mechanism, in the direction of arrows 5-5 of Figure 4.

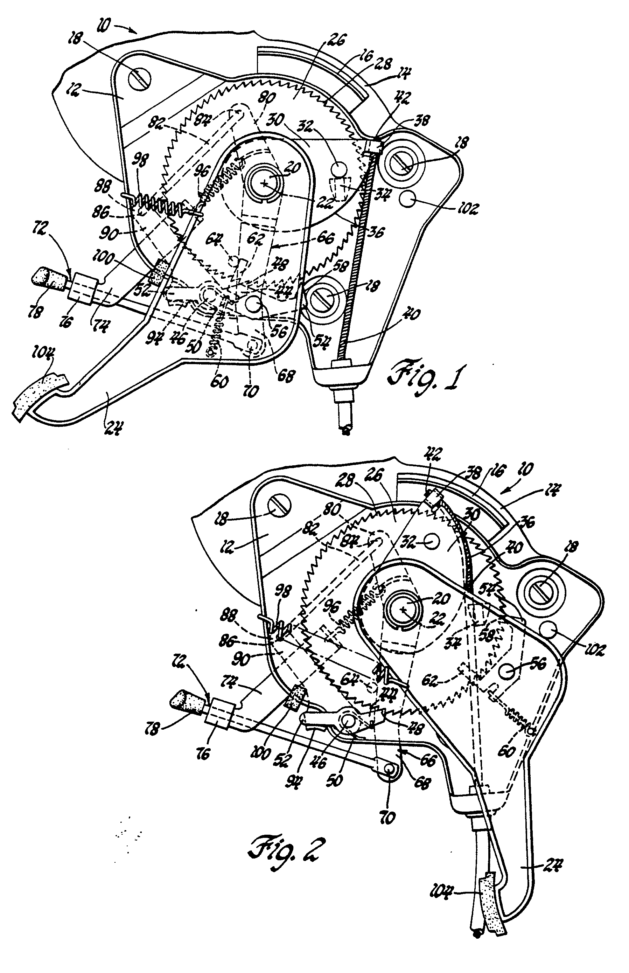

A parking brake actuating and release mechanism 10 which is shown in the drawings includes a fixed mounting bracket 12 fastened to a vehicle body shear wall bracket 14 in a portion of the vehicle interior immediately available to the vehicle operator for parking brake actuation. This location is typically on the side wall of the lower portion of the passenger compartment adjacent the vehicle operator's lower leg; in left-hand drive vehicles, this is the left-hand wall of that portion of the compartment. Since the mechanism is also mounted generally underneath the instrument panel, and other devices forming a part of the vehicle are positioned immediately above the mechanism, such devices including body acoustic material and electrical wires, for example, it is desirable to include a guard 16 mounted on or formed as a part of mounting bracket 12 and so located that it will tend to keep such devices and material out of the mechanism embodying the invention. The mounting bracket 12 is illustrated as being securely attached to the bracket 14 by fasteners 18, three such fasteners being illustrated. An axle-like pin 20 is secured to the bracket 12 and has an axis 22 positioned substantially perpendicularly to the general plane of the bracket 12. A parking brake pedal lever 24 is pivotally mounted on the pin 20 so as to be pivoted or moved arcuately about the axis 22 from the rest position shown in Figure 1 through a predetermined arcuate distance to the point of its maximum stroke, illustrated in Figure 2. By way of example, this predetermined arc of movement of the lever 24 may be about 65°. A toothed ratchet member 26, having teeth 28 on its outer periphery and illustrated as being a ratchet wheel, is also pivotally mounted on the pin 20 to rotate arcuately about the axis 22. The ratchet member 26 may under some circumstances be a sector rather than a complete wheel.

The ratchet member 26 is arcuately rotatable through a maximum predetermined arc which is preferably more than twice as wide as the predetermined arc through which the lever 24 may pivot. In the example illustrated in the drawings, the ratchet member 26 may pivot about the axis 22 through an angle of approximately 155°.

An eccentric cable take-up member 30 is also pivotally mounted to arcuately rotate about the axis 22 through the same maximum predetermined arc as the toothed ratchet member 26. In some arrangements the eccentric member 30 may be made substantially integral with the ratchet member 26. In the drawings, however, the eccentric member 30 is illustrated as being secured to the ratchet member 26 against relative rotation by means of a pin 32 that extends through the eccentric member and the ratchet member. The pin 32 may also extend beyond the ratchet member 26 so as to be adjacent the mounting bracket 12 and to be engageable with an abutment 34 formed as a part of, or secured to, the mounting bracket 12. The engagement of the pin 32 with the abutment 34, as illustrated in Figure 1, will define the release position of the ratchet member 26 and the eccentric cable take-up member 30.

The member 30 has a curved edge 36 of generally circular or otherwise curved form, with this edge extending from the outer end 38 of the eccentric member 30 through an arc thereon which is at least as great as the maximum predetermined arc through which the eccentric member may pivot. The edge is preferably grooved in a pulley-like fashion, as shown in Figure 4, or formed in some other suitable manner so that a parking brake cable 40 is guided so as to remain on the curved portion on the eccentric member as the parking brake mechanism is applied.

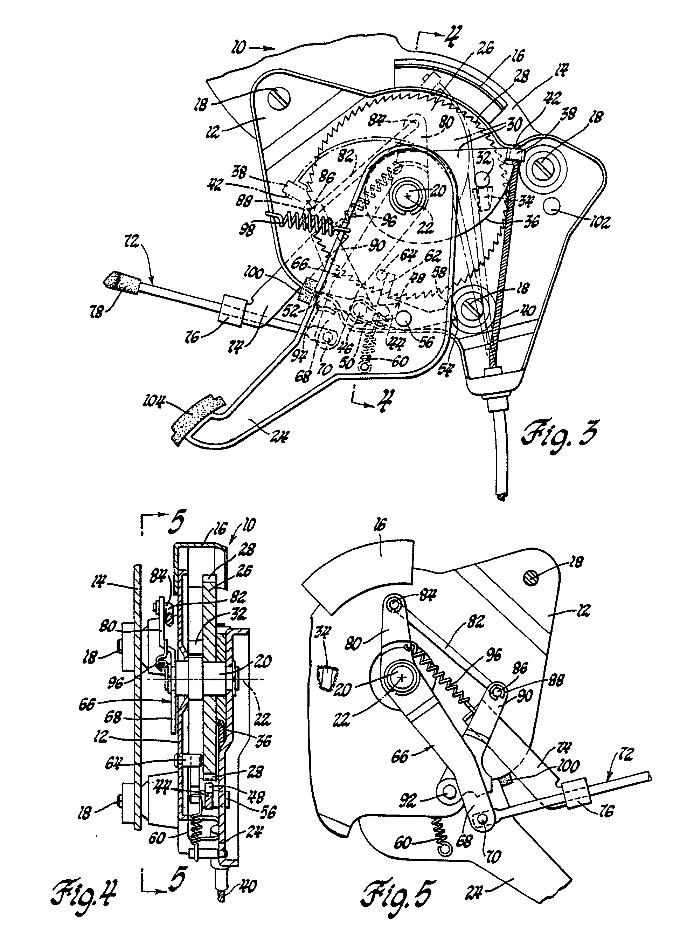

The cable 40 has an end 42 which is attached to the outer end 38 of the eccentric member 30 in a manner which will prevent it from becoming detached during operation of the mechanism. As can be seen in Figures 2 and 3, rotation of the eccentric member 30 in the brake-applying direction, which is counterclockwise as viewed in these Figures, causes the portion of the parking brake cable 40 near the cable end 42 to be laid into the grooved edge 36, with its point of tangency coming closer to the axis 22 as this rotation progresses. Thus the effective lever arm of the eccentric member 30, measured from the axis 22 to the cable point of tangency, decreases as the cable is tensioned.

A first pawl 44 is pivotally mounted by a pin 46 on a portion of the fixed mounting bracket 12 so that a tooth 48 of the pawl is movable into and out of engagement with the space between two of the teeth 28 of the ratchet member 26. A pawl spring 50 acts on the pawl 44 and reacts against a portion of the fixed mounting bracket 12 to resiliently bias the pawl towards a position of engagement with the teeth 28. The other end of the pawl 44 is formed to provide a pawl trip arm 52, which is used in the release of the mechanism as will be later described.

A second pawl 54 is pivotally mounted on the pedal lever 24 by means of a pin 56. A tooth 58 of the pawl 54 is selectively engageable and disengageable with the space between two of the adjacent teeth 28 of the ratchet member 26. The pawl 54 is positioned so that when the tooth 58 is thus engaged the brake-actuating movement of the pedal lever 24 will be transmitted through the pin 56 and the pawl 54 to force the toothed ratchet member 26 to rotate about the axis 22. The pawl 44 will permit this action by ratcheting over the teeth 28 of the ratchet member 26. A pawl spring 60 is attached to the pawl 54 and to a portion of the pedal lever 24 so as to continually urge the pawl tooth 58 towards a position of engagement with two adjacent ones of the teeth 28 of the ratchet member 26.

The pawl 54 is provided with a trip arm 62 which is engaged by a trip pin 64 mounted on a part of the mounting bracket 12 when the pedal lever 24 approaches its fully released position shown in Figure 1. The trip arm 62 extends on the opposite side of the ratchet member 26 from the pedal lever 24 in order to engage the trip pin 64 at this time. It can be seen that as the pedal lever 24 approaches its released position in its clockwise releasing movement, as viewed in Figures 1, 2 and 3, it will reach a point at which the trip arm 62 will engage the trip pin 64, and the pawl 54 will be forced to pivot about the pin 56 to remove the tooth 58 from the teeth of the ratchet member 26, and also overcome the biasing force of the spring 60 during this process. Thus in the released position shown in Figure 1, the tooth 58 of the pawl 54 is disengaged from the teeth of the ratchet member 26.

The release mechanism shown in Figures 1, 2 and 3 is also shown in Figure 5 in a view on the opposite side thereof from that in the other Figures. The release mechanism includes a link 66 which is pivoted on the pin 20 to be moved about the axis 22. The link 66 has generally oppositely extending arms, with a link arm 68 having a release lever 72 pivotally attached to its outer end at 70. The release lever 72 extends through a guide arm 74 that is secured to and supported by the fixed mounting bracket 12, and in turn supports a guide sleeve 76 through which the release lever 72 extends. The outer end of the release lever, projecting generally towards the vehicle operator, is illustrated as terminating in a T-shaped handle 78 which may be readily grasped by the operator and pulled when it is desired to release the parking brake mechanism. The other link arm 80 of the link 66 has a link 82 pivotally attached thereto at 84 and extending so as to be pivotally attached at 86 to one arm 88 of a trip lever 90. The trip lever 90 is pivotally mounted at 92 on the fixed mounting bracket 12 and has another arm 94 which is aligned so as to be in engagement with the trip arm 52 of the first pawl 44, as seen in Figure 2. A pivot 92 on which the trip lever 90 is pivoted may be, and preferably is, the pivot pin 46 of the first pawl 44.

A tension spring 96 is connected to the link 66 and to a part of the fixed mounting bracket 12, here illustrated as a part of the guide arm 74 which is securely attached to the mounting bracket, so as to urge the link 66 in a clockwise direction as viewed in Figure 5, which is the counterclockwise direction as viewed in Figures 1, 2 and 3. This urges the release lever inwardly to its inactive position, and the trip lever arm 94 in a direction such that it does not interfere with pawl operation of the first pawl 44. It can be seen, however, that when the vehicle operator pulls on the T-handle 78 and moves the release lever 72 outwardly, which is leftwardly as viewed in Figures 1, 2 and 3, this causes the link 66 to pivot and transmit force through the link 82 to pivot the trip lever 90, thus raising the trip lever arm 94, as viewed in Figures 1, 2 and 3, to engage the pawl trip arm 52 and move the first pawl 44 against the force of its spring 50 to remove the pawl tooth 48 from the toothed ratchet member 26, thus releasing that ratchet member. If this is done while the brake is applied, the brake-actuating tension force in the parking brake cable 40 will cause the toothed ratchet member 26 to rotate in a clockwise direction, as viewed in Figures 1, 2 and 3, together with the eccentric cable take-up member 30, so permitting the cable end 42 of the cable 40 to move from its applied position, which is one of the positions illustrated in phantom in Figure 3, back to the parking brake release position illustrated in Figure 1.

If the release lever 72 should be pulled by the vehicle operator while the brake pedal lever 24 is being held in the applied position illustrated in Figure 2, the tension in the parking brake cable will also act through the pawl 54 by way of the eccentric cable take-up member 30 and the ratchet member 26 to urge the pedal arm from that position back to the released position shown in Figure 1. As the brake pedal lever approaches the released position, the pin 64, will engage the trip arm 62, so releasing the pawl 54 from the ratchet member 26 and permitting this ratchet member as well as the eccentric take-up member 30 and the parking brake cable 40 to continue to move to the fully released condition of operation.

A tension spring 98 may also be provided to act on the pedal lever 24 and the fixed mounting bracket 12 to continually urge the pedal lever 24 towards the released position shown in Figure 1. A resilient bumper 100 is illustrated as being provided on the mounting bracket 12 to define the fully released position of the pedal lever 24. An abutment 102 may be provided on the mounting bracket 12 to be engaged by an edge of the parking brake lever 24 to define its maximum applied position.

In normal vehicle operation the parking brake mechanism is in the fully released position shown in Figure 1. When the vehicle operator decides to apply the parking brake, the operator exerts a suitable force on a pedal 104 on the parking brake pedal lever 24 to move that lever arcuately about the axis 22, and thus through the predetermined maximum arc set forth by the position of the bumper 100 and abutment 102 if desired. As noted above, this arc is illustrated in the drawings as being approximately 65°. During this movement, the pawl 44 will ratchet over the teeth 28, and the pawl 54, being in engagement with those teeth, will drive the ratchet member 26 and therefore the eccentric cable take-up member 30 counterclockwise as viewed in Figures 1, 2 and 3, so applying tension to the parking brake cable 40. When the first stroke of the pedal lever 24 has been completed, as illustrated in Figure 2, the ratchet member 26 and the eccentric cable take-up member 30 will be rotated through a similar arc of about 65° from the release position. Since the vehicle operator is instructed to pump the pedal 104 for one or more strokes until the desired parking brake force is achieved, the operator will then release the brake pedal 104, so allowing the pedal lever 24 to rotate clockwise from its position shown in Figure 2 so that it returns to the position shown in Figure 1. This is permitted by the tooth 58 of the pawl 54 ratcheting over the teeth 28 of the ratchet member 26 while the pawl 44 holds the ratchet member 26 against any releasing movement. The vehicle operator again applies force to the brake pedal 104 for a second stroke, and may again move it through the maximum arc if so desired. This will move the ratchet member 26 and the eccentric cable take-up member 30 through an additional arc equal to the arc of movement of the pedal lever, which may be as much as 65°, as noted above. The operator will then remove the force from the brake pedal, and it will again return to the position shown in Figure 1. However, the cable end 42 will have moved further in a counterclockwise direction from the position shown in Figure 2, with additional tension having been applied to the parking brake cable 40. At the same time the parking brake cable is being laid in the groove 36 of the eccentric cable take-up member 30, and, because of the shape of the eccentric, the effective lever arm of the eccentric is being decreased from the axis 22 to the point of tangency of the cable, so increasing the mechanical advantage as the eccentric cable take-up member 30 moves in the actuating direction. This is particularly well illustrated in Figure 3, which shows the various steps involved. If the vehicle operator desires to further tension the parking brake cable 40, the operator may again stroke the pedal lever 24, thereby rotating the toothed ratchet member 26 and the eccentric cable take-up member 30 even further in a counterclockwise direction. For example, the cable end 42 may be moved to the fully applied position illustrated in Figure 3, and the brake pedal lever may be released to its return rest position also shown in Figure 3.

When the vehicle operator desires to release the parking brake, the operator merely pulls on the handle 78 to move the release lever 72, thereby actuating the trip lever 90 so that its arm 94 engages the trip arm 52 of the pawl 44 and removes the pawl tooth 48 from the teeth 28 of the ratchet member 26. Since the trip arm 62 of the pawl 54 is already in engagement with the trip pin 64, so holding the pawl tooth 58 of the pawl 54 out of engagement with the teeth of ratchet member 26, the ratchet member 26 and the eccentric cable take-up member 30 are able to rotate towards the released position, under the influence of the tension in the parking brake cable 40, until the parking brake is fully released. The vehicle operator may then release the lever 72, whereupon the tooth 48 of the pawl 44 will once again engage the toothed ratchet member 26 and be in a condition to again hold tension in the parking brake cable 40 when the mechanism is again actuated.

In one specific embodiment it has been found that the shape of the curve of the edge 36 of the eccentric cable take-up member 30 is desirably such that the mechanical advantage (ratio) between cable travel and pedal stroke will increase from approximately 3:1 at the beginning of brake actuation to approximately 4.2:1 at the end of the first stroke, and continuing from 4.2:1 at the beginning of the second stroke to approximately 6:1 at the end of the second stroke. During the third stroke the mechanical advantage may increase from approximately 6:1 to about 7:1 maximum. The eccentric member may be so shaped that before completion of the third stroke the ratio may decrease slightly, for example to about 6:1 if desired.

It has been found that with a vehicle having a weight of approximately 2050 kilograms and incorporating the parking brake in disc brake calipers, the desired maximum cable travel capability of about 125 millimetres may be approached within three strokes. Thus the first stroke may move the cable about 54 millimetres, the second stroke may move the cable by an additional amount to a total of about 89.5 millimetres, and the third stroke may move the cable by an additional amount to a total of about 117.5 millimetres. All of this may be accomplished within the maximum requirements permitted for the amount of brake pedal force to be applied to fully apply the parking brake mechanism to hold the vehicle on the appropriate road gradient. In a typical installation it has been found that the mechanism will supply sufficient parking brake force to hold such a vehicle on a 20 per cent gradient by the application of the mechanism with two such strokes; it will also hold on a 30 per cent gradient by the application of the mechanism through a portion of the third stroke, before the maximum mechanical advantage has been obtained.

## Claims

1. A parking brake mechanism comprising a parking brake cable (40) adapted to be tensioned to apply a parking brake and released to release the parking brake, a parking brake pedal lever (24) movable in a brake-applying direction and returnable to a rest position, tensioning means (54, 26, 32, 30) for tensioning the parking brake cable (40) in response to movement of the pedal lever (24) in the brake-applying direction, the tensioning means including a toothed ratchet member (26) mounted for arcuate rotation about an axis (22) through a first predetermined maximum arc of rotation to obtain the maximum required cable tension for maximum parking brake application, and a first pawl (44) normally engageable with the toothed ratchet member (26) to permit rotation thereof in the brake-applying direction only, releasing means (72, 66, 82, 90, 44) for releasing the tension in the parking brake cable (40) to release the parking brake, the releasing means being selectively operable to disengage the first pawl (44) from the toothed ratchet member (26) and release the toothed ratchet member (26) so that the tension in the cable (40) is released and the cable (40) and the toothed ratchet member (26) are returned to the brake-released position, the parking brake pedal lever (24) being mounted for arcuate rotation about the axis (22) through a second predetermined maximum arc of rotation which is substantially less than the said first predetermined maximum arc of rotation and has a return spring (98) continually urging the parking brake pedal lever (24) in the opposite arcuate direction from its brake-applying direction of arcuate movement, and having a second pawl (54) pivotally mounted thereon and normally engageable with the toothed ratchet member (26) in driving relation for moving the toothed ratchet member (26) to tension the cable (40) to apply the parking brake when the parking brake pedal lever (24) is rotated in the brake-applying direction, the second pawl (54) being arranged to ratchet over the toothed ratchet member (26) when the second pawl is moved in a brake-releasing direction relative to the toothed ratchet member (26), the parking brake pedal lever (24) being arcuately movable in a series of brake-applying strokes within the second predetermined maximum arc of rotation to rotate the toothed ratchet member (26) within the first predetermined maximum arc of rotation to further tension the cable (40), characterised in that a cable take-up member (30) is eccentrically mounted for arcuate rotation about the axis (22) and has a curved cable-receiving groove or the like with a maximum radius point (38) to which the cable (40) is attached, the curved cable-receiving groove being eccentrically rotatable so that the point of tangency of the cable (40) to the cable take-up member (30) establishes the effective arm length of the cable take-up member (30) as a decreasing value as the cable take-up member (30) is rotated about the axis (22) to tension the cable (40), thereby increasing the effective mechanical advantage as the cable (40) is being tensioned within a range of about 3:1 to 7:1 ratio of pedal movement to cable tensioning movement, the toothed ratchet member (26) being attached by means (32) to the cable take-up member (30) for driving the cable take-up member (30) therewith.

2. A parking brake mechanism according to claim 1, characterised in that the parking brake pedal lever (24), the toothed ratchet member (26), and the eccentric cable take-up member (30) are pivotally mounted on a mounting bracket (12) to pivot arcuately about the axis (22); in that the first releasable pawl (44) is pivotally mounted on the mounting bracket (12); and by trip means (64) provided on the fixed mounting bracket (12) for engaging the second pawl (54) as the brake pedal lever (24) is returned to the rest position, to hold the second pawl (54) out of engagement with the toothed ratchet member (26) while the brake pedal lever (24) is at the rest position, the second pawl (54) being arranged to be moved during initial brake-actuating movement of the brake pedal lever (24) for disengagement of the second pawl (54) from the trip means and engagement of the toothed ratchet member (26) in driving relation.

**Patentansprüche**

1. Parkbremsmechanismus mit einem Parkbremsseil (40), das zum Anziehen einer Parkbremse gespannt und zum Lösen der Parkbremse freigegeben werden kann, mit einem Parkbremsfußhebel (24), der in eine Bremsenanzugsrichtung bewegbar und in eine Raststellung zurückdrehbar ist, mit Spannmitteln (54, 26, 32, 30) zum Spannen des Parkbremsseils (40) in Reaktion auf eine Bewegung des Fußhebels (24) in die Bremsenanzugsrichtung, wobei die Spannmittel ein gezahntes Klinkenrad (26) enthalten, das für eine bogenförmige Drehung um eine Achse (22) entlang eines ersten vorbestimmten maximalen Drehbogens angebracht ist, um die maximale erforderliche Seilspannung zum maximalen Anziehen der Parkbremse zu erhalten, und mit einer ersten Sperrklinke (44), die normalerweise mit dem gezahnten Klinkenrad (26) in Eingriff bringbar ist, um dessen Drehung nur in der Bremsenanzugsrichtung zu erlauben, mit Lösemitteln (72, 66, 82, 90, 44) zum Lösen der Spannung in dem Parkbremsseil (40), um die Parkbremse zu lösen, wobei die Lösemittel wahlweise betätigbar sind, um die erste Sperrklinke (44) außer Eingriff mit dem gezahnten Klinkenrad (26) zu bringen und das gezahnte Klinkenrad (26) zu lösen, so daß die Spannung in dem Seil (40) gelöst wird und das Seil (40) und das gezahnte Klinkenrad (26) in die Bremsenlösestellung zurückgedreht werden, wobei der Parkbremsfußhebel (24) für eine bogenförmige Drehung um die Achse (22) entlang eines zweiten vorbestimmten maximalen Drehbogens angebracht ist, welcher wesentlich kleiner als der erste vorbestimmte maximale Drehbogen ist, und eine Rückdrehfeder (98) aufweist, die den Parkbremsfußhebel (24) kontinuierlich in die entgegengesetzte bogenförmige Richtung von seiner bogenförmigen Bremsenanzugsbewegungsrichtung drängt, und wobei er eine zweite Sperrklinke (54) aufweist, die auf ihm schwenkbar angebracht und normalerweise mit dem gezahnten Klinkenrad (26) in Antriebbeziehung zum Bewegen des gezahnten Klinkenrads (26) in Eingriff bringbar ist, um das Seil (40) zu spannen, um die Parkbremse anzuziehen, wenn der Parkbremsfußhebel (24) in die Bremsenanzugsrichtung gedreht wird, wobei die zweite Sperrklinke (54) so angeordnet ist, daß sie über das gezahnte Klinkenrad (26) gleitet, wenn die zweite Sperrklinke in eine Bremsenlöserichtung relativ zum gezahnten Klinkenrad (26) bewegt wird, wobei der Parkbremsfußhebel (24) bogenförmig in einer Reihe von Bremsenanzugshüben innerhalb des zweiten vorbestimmten maximalen Drehbogens bewegbar ist, um das gezahnte Klinkenrad (26) innerhalb des ersten vorbestimmten maximalen Drehbogens zu drehen, um das Seil (40) weiter zu spannen, dadurch gekennzeichnet, daß ein Seilaufwickelglied (30) exzentrisch für eine bogenförmigen Drehung um die Achse (22) angebracht ist und eine gekrümmte Seilaufnahmenut oder ähnliches mit einem maximalen Radiuspunkt (38) aufweist, an dem das Seil (40) befestigt ist, wobei die gekrümmte Seilaufnahmenut exzentrisch drehbar ist, so daß der Berührungspunkt des Seils (40) mit dem Seilaufwickelglied (30) die effektive Armlänge des Seilaufwickelglieds (30) mit einem abnehmenden Wert festlegt, wenn das Seilaufwickelglied (30) um die Achse (22) zum Spannen des Seils (40) gedreht wird, wobei der effektive mechanische Nutzen erhöht wird, da das Kabel (40) innerhalb eines Verhältnisbereichs von ungefähr 3:1 bis 7:1 der Pedalbewegung zur Seilspannbewegung gespannt wird, wobei das gezahnte Klinkenrad (26) mit einem Mittel (32) an dem Seilaufwickelglied (30) befestigt ist, um das Seilaufwickelglied (30) mit diesem anzutreiben.

2. Parkbremsmechanismus nach Anspruch 1, dadurch gekennzeichnet, daß der Parkbremsfußhebel (24), das gezahnte Klinkenrad (26) und das exzentrische Seilaufwickelglied (30) schwenkbar auf einem Halteträger (12) angebracht sind, um bogenförmig um die Achse (22) zu schwenken; daß die erste lösbare Sperrklinke (44) auf dem Halteträger (12) schwenkbar angebracht ist; und daß Auslösemittel (64) auf dem festen Halteträger (12) vorgesehen sind, um mit der zweiten Sperrklinke (54) in Eingriff zu gelangen, wenn der Bremsfußhebel (24) zur Raststellung zurückgedreht wird, um die zweite Sperrklinke (54) außer Eingriff mit dem gezahnten Klinkenrad (26) zu halten, während der Bremsfußhebel (24) in der Raststellung ist, wobei die zweite Sperrklinke (54) so angeordnet ist, daß sie während der anfängli-chen Bremsbetätigungsbewegung des Bremsfuß-hebels (24) bewegt wird, um die zweite Sperrklinke (54) außer Eingriff mit dem Auslösemittel und das gezahnte Klinkenrad (26) in Antriebbeziehung zu bringen.

## Revendications

1. Mécanisme de frein de stationnement, comprenant un câble de frein de stationnement (40) qui est adapté pour être tendu pour serrer un frein de stationnement et relâché pour relâcher le frein de stationnement, un levier de pédale de frein de stationnement (24) qui peut être déplacé dans le sens de serrage du frein et être ramené à une position de repos, des moyens de tension (54, 26, 32, 30) destinés à tendre le câble de frein de stationnement (40) en réponse à un mouvement du levier (24) de la pédale dans le sens du serrage du frein, les moyens de tension comprenant un élément à rochet denté (26) monté pour tourner en arc autour d'un axe (22), sur un premier arc maximum prédéterminé de rotation, pour obtenir la tension de câble maximum voulue correspondant au serrage maximum de frein de stationnement, et un premier cliquet (44) qui peut normalement être mis en prise avec l'élément à rochet denté (26) pour permettre de le faire tourner uniquement dans le sens du serrage du frein, des moyens de relâchement (72, 66, 82, 90, 44) destinés à relâcher la tension dans le câble (40) du frein de stationnement pour relâcher celui-ci, les moyens de relachement pouvant être sélectivement mis en prise pour dégager le premier cliquet (44) de l'élément à rochet denté (26) et relâcher l'élément à rochet denté (26) de manière que la tension dans le câble (40) soit relâchée et que le câble (40) et l'élément à rochet denté (26) soient ramenés à la position de relâchement du frein, le levier (24) de la pédale de frein de stationnement étant monté pour décrire un mouvement de rotation en arc autour de l'axe (22), sur un deuxième arc de rotation maximum prédéterminé qui est nettement inférieur audit premier arc de rotation prédéterminé, et qui possède un ressort de rappel (98) qui tend continuellement à faire tourner le levier (24) de la pédale de frein de stationnement dans le sens inverse de son sens de mouvement en arc qui tend au serrage du frein, et possédant un deuxième cliquet (54) monté pivotant sur lui et qui peut etre normalement mis en prise pour l'entraînement avec l'élément à rochet (26), pour faire tourner l'élément à rochet denté (26) pour tendre le câble (40) de façon à serrer le frein de stationnement lorsqu'on fait tourner le levier (24) de la pédale du frein de stationnement dans le sens du serrage du frein, le deuxième cliquet (54) étant agencé pour sauter sur l'élément à rochet denté (26) lorsque le deuxième cliquet est mis en mouvement dans le sens du relâchement du frein par rapport à l'élément à rochet denté (26), le levier (24) de la pédale de frein de stationnement pouvant être tourné en arc en une série de courses de serrage du frein dans les limites du deuxième arc maximum prédéterminé de rotation, pour faire tourner l'élément à rochet denté (26) dans les limites du premier arc de rotation maximum prédéterminé pour tendre davantage le câble (40), caractérisé en ce qu'un élément (30) de tirage du câble est monté excentriquement pour décrire une rotation en arc autour de l'axe (22) et présente une gorge courbe de réception du câble, ou équivalent, qui présente un point de rayon maximum (38), auquel le câble (40) est fixé, la gorge courbe de réception du câble pouvant être tournée excentriquement de telle manière que le point de tangence du câble (40) sur l'élément (30) de tirage du câble établisse la longueur effective du bras de levier de l'élément (30) de tirage du câble avec une valeur qui décroît lorsque l'élément (30) de tirage du câble est mis en rotation autour de l'axe (22) pour tendre le câble (40), en faisant ainsi croître le taux de multiplication d'effort effectif lorsque le câble (40) est tendu, dans un intervalle d'environ 3:1 à 7:1 de valeur du rapport entre le mouvement de la pédale et le mouvement de tension du câble, l'élément à rochet denté (26) étant fixé à l'élément (30) de tirage du câble par des moyens (32) pour entraîner l'élément (30) de tirage du câble avec lui.

2. Mécanisme de frein de stationnement selon la revendication 1, caractérisé en ce que le levier (24) de la pédale du frein de stationnement, l'élément à rochet denté (26) et l'élément excentrique (30) de tirage du câble sont montés pivotants sur un flasque de montage (12) pour pivoter en arc autour de l'axe (22), en ce que le premier cliquet dégageable (47) est monté pivotant sur le flasque de montage (12), et en ce que des moyens de déclenchement (64) sont prévus sur le flasque de montage fixe (12) pour coopérer avec le deuxième cliquet (54) lorsque le levier (24) de la pédale de frein est ramené à la position de repos, pour maintenir ainsi le deuxième cliquet (54) dégagé de l'élément à rochet denté (26) pendant que le levier de pédale de frein (24) se trouve dans la position de repos, le deuxième cliquet (54) étant agencé pour se déplacer, pendant le mouvement initial de serrage du frein du levier (24) de la pédale pour dégager le deuxième cliquet (54) des moyens de déclenchement et attaquer l'élément à rochet denté (26) en entrant en prise pour l'entraînement.

*Fig. 1*

*Fig. 2*

EP 0 164 231 B1

Fig. 3

Fig. 4

Fig. 5

2